# EUROPEAN PATENT APPLICATION

(11) **EP 2 140 833 A1**
(43) Date of publication of application: **06.01.2010**
(21) Application number: 08012069.4
(22) Date of filing: 03.07.2008
(51) Int. Cl.: A61C 17/022, A61C 19/06

(54) **Dental treatment apparatus**

(71) Applicant: Curozone USA Inc., Aurora, Ontario L4G 1H5 (CA)
(72) Inventor: Schmid, Melanie, 88448 Attenweiler-Schammach (DE); Hehl, Harald, 87471 Durach (DE); Schemmer, Jürgen H., King City Ontario, L7B 1A (CA)
(74) Representative: Spranger, Stephan

(57) **Abstract**

The present invention relates to a dental treatment apparatus comprising a source of gas, a generator for generating oxidizing gas from the gas of the source, an application device for application of the oxidizing gas to a selected application area and exposing the selected application area to the oxidizing gas, a destructor for the oxidizing gas and a vacuum pump to create a pressure sufficient to suck the oxidizing gas from the application device to the destructor, whereby an additional gas reservoir for the gas from the source is provided between the source and the generator.

## Description

The present invention generally relates to dental treatment, and is more particularly directed to a dental treatment apparatus utilizing an oxidizing gas.

Such a dental treatment apparatus comprises a source of gas, a generator for generating oxidizing gas from the gas of the source, an application device for the application of the oxidizing gas to a selected application area and exposing the selected application area to the oxidizing gas, a destructor for the oxidizing gas and a vacuum pump to create a pressure sufficient to suck the oxidizing gas from the application device to the destructor according to the preamble of claim 1.

Generally, a dental treatment apparatus for the treatment of dental caries is, for example, known from European patent EP 1 335 680 B1.

Today, known dental treatment apparatues often use ambient air as a source of gas. However, this might lead to problems under certain circumstances, as, for example, some constituents of ambient air could be harmful when applied in dental treatment. Accordingly, the use of pure oxygen as a source of gas can eliminate problems that occur due to harmful constituents of ambient air. Pure oxygen can, for example, be supplied in bottles of pressurized pure oxygen or by using central oxygen supply-lines, as, for example, used in medical research centers. However, such sources of gas, i.e. pressurized pure oxygen, are difficult to handle and to control when using them as a gas source for the generation of oxidizing gas, e.g. ozone, from pure pressurized oxygen. For example, the sole use of pressure reducers and/or pressure-reducing valves in connection with bottles of pressurized pure oxygen is hardly controllable, and the high pressures of up to 200 bar can cause additional control problems when only a certain amount of gas at a pressure just above ambient pressure is needed, as is the case with the use of oxidizing gas/ozone in dental treatment generated from gas/oxygen.

Thus, it is the object of the present invention to provide a dental treatment apparatus, which overcomes the problems known from the prior art, in particular providing a dental treatment apparatus that is easily adapted to use gas from a source that may be a source of pressurized gas.

It is a further object of the present invention to provide a dental treatment apparatus that is easily controllable and safe in use when using gas from a source of pressurized gas.

These objects can be achieved with a dental treatment apparatus having features according to claim 1.

Embodiments of the invention are defined in the dependent claims.

The dental treatment apparatus according to the invention comprises a source of gas, a generator for generating oxidizing gas for the gas of the source, an application device for the application of the oxidizing gas to a selected application area and exposing the selected application area to the oxidizing gas, a destructor for the oxidizing gas and a vacuum pump to create a pressure sufficient to suck the oxidizing gas from the application device to the destructor. According to the invention, an additional gas reservoir for the gas from the source is provided between the source and the generator.

With the dental treatment apparatus according to the invention it is possible to control and secure the stream of gas from the source, in particular a pressurized source, e.g. a bottle of pressurized pure oxygen, to the generator for generating the oxidizing gas to be used for dental treatment. Thus, also a controlled and secure stream of oxidizing gas to and from the application device can be achieved under all circumstances, as any problems mentioned above known from the prior art with regard to the use of a pressurized gas can be avoided by interconnecting an additional gas reservoir between the source of (pressurized) gas and the generator for generating oxidizing gas from gas from that source.

According to the invention, a secure and controllable adjustment of the stream, the concentration and the rate of oxidizing gas generated by the generator for generating oxidizing gas and used in the application device can be easily and securely achieved, even if the oxidizing gas is generated from gas from a source of gas that uses pressurized gas, e.g. a bottle of pressurized pure oxygen or pressurized medical oxygen.

The dental treatment apparatus may include a first valve for shutting off the gas reservoir from the source of gas between the source of gas and the gas reservoir and a second valve for shutting off the gas reservoir from the generator between the gas reservoir and the generator. The first valve and the second valve may be controlled in order to allow a continuous or batchwise stream of gas from the source to and from the additional gas reservoir. Thus, a specific stream of gas can be controlled and adjusted to the additional gas reservoir, from the additional gas reservoir to the generator and also from the generator the stream of generated oxidizing gas to and from the application device can be controlled.

According to the invention, a first manometric switch for detecting the pressure of gas from the source at the gas reservoir may be provided between the first valve and the gas reservoir, and a second manometric switch for detecting the pressure of gas from the gas reservoir may be provided between the gas reservoir and the second valve. These manometric switches allow for a detection of the respective pressures at the respective points in order to use these detected pressure values to control the first valve and the second valve, for example.

A controller may be provided for controlling the first valve and the second valve in accordance with the pressure values detected by the first manometric switch and the second manometric switch.

A differential pressure-regulating valve for measuring the pressure of gas entering the generator may be provided between the gas reservoir and the generator.

The controller may be provided for regulating the generator and the vacuum pump in order to circulate the oxidizing gas to and from the application device at a pressure insufficient to escape past a sealed engagement between the application device and the selected application area. Thus, an escape of oxidizing gas from the application device, e.g. into the mouth of a person undergoing dental treatment with the dental treatment apparatus according to the invention, can securely be avoided under all circumstances.

Preferably, the oxidizing gas may be ozone.

The gas of the source of gas may be pressurized medical oxygen.

The application device may include a handpiece and a cup including a resilient cup edge for sealably engaging around the selected application area to prevent escape of the oxidizing gas therepast, and the generator of oxidizing gas and the vacuum pump may be in connection with an aspiration line connected to said application device for enabling circulation of the oxidizing gas into and out of a cup chamber subtending the resilient cup edge.

A filter may be provided for the removal of any residual moisture in the oxidizing gas stream from the aspiration line.

The dental treatment apparatus according to the invention may be adapted to be used as a dental caries treatment apparatus and/or as a dental bacteria treatment apparatus. The rates and streams of oxidizing gas can be chosen and adjusted accordingly.

The selected application area may be a selected area of a tooth. Thus, the dental treatment apparatus may be adapted to be used as a dental caries treatment apparatus for the treatment of dental caries at the selected area of the tooth or at a selected area of several teeth.

The advantages and features of the present invention will be better understood in combination with the following description, when considered in conjunction with the accompanying drawing, in which:

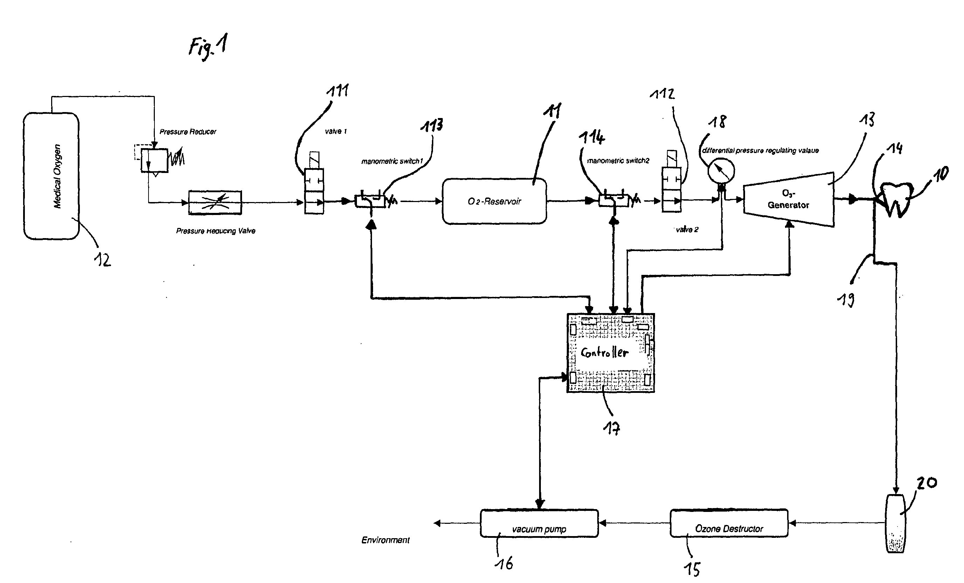

Fig. 1 schematically illustrates a block diagram of a dental treatment apparatus in accordance with the present invention.

As schematically illustrated in Fig. 1, a source 12 of gas is a bottle or supply line of pressurized medical oxygen connected via a pressure reducer and a pressure-reducing valve to a first valve 111 of the dental treatment apparatus. A first manometric switch 113 for detecting the pressure of gas from the source 12 is provided between the first valve 111 and an additional gas reservoir 11 for the gas from the source 12. Between the gas reservoir 11 and a second valve 112, a second manometric switch 114 for detecting the pressure of gas from the gas reservoir 11 is provided. From there, the gas from the source 12, led through the additional gas reservoir 11, goes through a differential pressure-regulating valve 18 for measuring the pressure of gas entering a generator 13 for generating oxidizing gas from the gas of the gas source 12. As can be seen in Fig. 1, the oxidizing gas generator 13 is an ozone (O₃)generator.

From the generator 13 of ozone, the oxidizing gas is led to an application device 14 for the application of the oxidizing gas to a selected application area, in the case shown, a selected area of a tooth 10. The application device 14 includes a handpiece and a cup including a resilient cup edge for sealably engaging around the selected application area to prevent escape of the oxidizing gas therepast. Handpiece and cup are not shown here in Fig. 1.

The generator 13 of oxidizing gas and the application device 14 are in connection with an aspiration line 19 connected to the application device 14. In addition, also a vacuum pump 16 is in connection with the aspiration line 19. This design enables the circulation of the oxidizing gas into and out of a cup chamber subtending the resilient cup edge of the cup of the application device 14. The vacuum pump 16 creates a pressure sufficient to suck the oxidizing gas from the application device 14 to a destructor 15, in the case shown in Fig. 1 an ozone destructor. A filter 20 is provided for the removal of any residual moisture from the application line 19. As shown in Fig. 1, this filter 20 is provided upstream of the ozone destructor 15 and the vacuum pump 16. The outlet of the vacuum pump 16 is in connection with the environment.

A controller 17 is provided for controlling all elements of the dental treatment apparatus. The controller 17 is provided for controlling the first valve 111 and the second valve 112 in accordance with the pressure values detected by the first manometric switch 113 and by the second manometric switch 114. The controller 17 also regulates the generator 13 and the vacuum pump 16 in order to circulate the oxidizing gas to and from the application device 14 at a pressure insufficient to escape past a sealed engagement between the application device 14 and the selected application area at the tooth 10. All elements of the dental treatment apparatus may be connected to the controller 17, even if not shown in Fig. 1 for clarity reasons. The streams of gas and the streams of oxidizing gas (downstream the generator 13) are indicated by arrows in Fig. 1.

The additional gas reservoir 11 allows a continuous or batchwise controllable stream of gas from the source 12 of pressurized medical oxygen in the dental treatment apparatus, i.e. especially to the generator 13, and further on a controllable stream of oxidizing gas to and from the application device 14.

According to the invention, a secure, controllable and adjustable use of oxidizing gas for dental treatment can be achieved by using the additional gas reservoir 11 as a sort of a buffer buffering the source 12 of gas, e.g. pressurized medical oxygen, from the elements of the dental treatment apparatus downstream, in particular the generator 13 and the application device 14.

## Claims

1. Dental treatment apparatus comprising a source (12) of gas, a generator (13) for generating oxidizing gas from the gas of the source (12), an application device (14) for application of the oxidizing gas to a selected application area and exposing the selected application area to the oxidizing gas, a destructor (15) for the oxidizing gas and a vacuum pump (16) to create a pressure sufficient to suck the oxidizing gas from the application device (14) to the destructor (15), **characterized in that** an additional gas reservoir (11) for the gas from the source (12) is provided between the source (12) and the generator (13).

2. Apparatus according to claim 1, **characterized in that** a first valve (111) for shutting off the gas reservoir (11) from the source (12) of gas is provided between the source (12) of gas and the gas reservoir (11) and a second valve (112) for shutting off the gas reservoir (11) from the generator (13) is provided between the gas reservoir (11) and the generator (13).

3. Apparatus according to claim 1 or claim 2, **characterized in that** a first manometric switch (113) for detecting the pressure of gas from the source (12) at the gas reservoir (11) is provided between the first valve (111) and the gas reservoir (11) and a second manometric switch (114) for detecting the pressure of gas from the gas reservoir (11) is provided between the gas reservoir (11) and the second valve (112).

4. Apparatus according to claim 2 and 3, **characterized in that** a controller (17) is provided for controlling the first valve (111) and the second valve (112) in accordance with the pressure-values detected by the first manometric switch (113) and by the second manometric switch (114).

5. Apparatus according to claim 1 to 4, **characterized in that** a differential pressure regulating valve (18) for measuring the pressure of gas entering the generator (13) is provided between the gas reservoir (11) and the generator (13).

6. Apparatus according to claim 5, **characterized in that** the controller (17) is provided for regulating the generator (13) and the vacuum pump (16) in order to circulate the oxidizing gas to and from the application device (14) at a pressure insufficient to escape past a sealed engagement between the application device (14) and the selected application area.

7. Apparatus according to claim 1 to 6, **characterized in that** the oxidizing gas is ozone.

8. Apparatus according to claim 1 to 7, **characterized in that** the gas of the source (12) is pressurized medical oxygen.

9. Apparatus according to claim 1 to 8, **characterized in that** the application device (14) includes a handpiece and a cup including a resilient cup edge for sealably engaging around the selected application area to prevent escape of the oxidizing gas therepast and the generator (13) of oxidizing gas and the vacuum pump (16) are in connection with an aspiration line (19) connected to said application device (14) for enabling circulation of the oxidizing gas into and out of a cup chamber subtending the resilient cup edge.

10. Apparatus according to claim 9, **characterized in that** a filter (20) is provided for removal of any residual moisture from the aspiration line (19).

11. Apparatus according to claim 1 to 10, **characterized in that** the dental treatment apparatus is adapted to be used as a dental caries and/or bacteria treatment apparatus.

12. Apparatus according to claim 1 to 11 **characterized in that** the selected application area is a selected area of a tooth (10).
